# EUROPÄISCHE PATENTANMELDUNG

(11) **EP 2 706 043 A1**
(43) Veröffentlichungstag der Anmeldung: **12.03.2014**
(21) Anmeldenummer: 13183337.8
(22) Anmeldetag: 06.09.2013
(51) Int. Cl.: C02F 1/66, C02F 1/52

(54) **Verfahren zum Neutralisieren von sauren Stoffen**

(30) Priorität: 11.09.2012 DE 102012108494
(71) Anmelder: Grimbach, Norbert, 41541 Dormagen (DE); Sekerci, Ali, 41540 Dormagen (DE)
(72) Erfinder: Grimbach, Nortbert, 41541 Dormagen (DE)
(74) Vertreter: Albrecht, Ralf

(57) **Zusammenfassung**

Die vorliegende Erfindung betrifft ein Verfahren zum Neutralisieren von sauren Stoffen, insbesondere von sauren Flüssigkeiten und sauren Flüssigkeit/Feststoff-Gemischen, wobei dem sauren Stoff zur Erhöhung des pH-Wertes Altglaspulver hinzugefügt wird, wobei das Altglaspulver mit Wasser vermischt wird, um es in wässrige Lösung zu bringen.

## Beschreibung

Die vorliegende Erfindung betrifft ein Verfahren zum Neutralisieren von sauren Stoffen, insbesondere von sauren Flüssigkeiten und sauren Flüssigkeit/Feststoff-Gemischen. Im Speziellen betrifft die Erfindung ein Verfahren zur Aufbereitung von Abwasser, insbesondere von kommunalem Abwasser, industriellem Abwasser oder industriellem Prozesswasser.

Mit dem Begriff Abwasser wird im Allgemeinen dasjenige Wasser bezeichnet, welches durch Gebrauch, beispielsweise im Haushalt, in der Industrie oder auch in der Landwirtschaft verunreinigt wird. Darüber hinaus zählt aufgefangenes Regenwasser zum Abwasser. Aufgrund des Gebrauches sind in dem Abwasser zahlreiche Inhaltsstoffe enthalten, beispielsweise Tenside, Phosphate, Fettsäuren, Harnstoff, Eiweiß, Schwermetalle, Medikamentenrückstände, Hormone sowie Gifte. Da einige der Inhaltsstoffe schädlich für Mensch und Umwelt sind, muss das Abwasser zunächst aufbereitet werden, bevor es beispielsweise gefahrlos in bestehende Gewässer rückgeführt oder einer weiteren Nutzung zugeführt werden kann.

Zur Aufbereitung von Abwasser sind zahlreiche Verfahren aus dem Stand der Technik bekannt. Im Rahmen dieser wird durch gezielte Reduzierung bzw. Entfernung von Inhaltsstoffen aus dem Abwasser die Wasserqualität - zumindest in einem vorgegebenen Maße - wiederhergestellt. Hierzu umfassen die Abwasseraufbereitungs-Verfahren in der Regel mehrere Klärstufen, im Rahmen derer mechanische, biologische und chemische Reinigungsprozesse durchlaufen werden sowie Filtration stattfindet.

In der mechanischen Reinigungsstufe sollen Stoffe, die in fester Form in dem Abwasser vorliegen, entfernt werden. Für grobkörnige Feststoffe kommen dabei insbesondere Rechenanlagen zum Einsatz, in denen das zu behandelnde Abwasser durch Grob- und/oder Feinrechen geleitet wird. Die verhältnismäßig großen Partikeln werden dann mit den Rechen herausgesiebt. Darüber hinaus kann im Rahmen der mechanischen Reinigung ein Sandund Fettfang zum Einsatz kommen, bei dem Luft in das Abwasser eingeblasen wird und das Fett an die Oberfläche spült, während sich Sand am Boden absetzt. Fett und Sand können dann abgepumpt werden. Im Anschluss an den Fett- und Sandfang durchläuft das Abwasser mit geringer Fließgeschwindigkeit ein Vorklärbecken, in dem sich enthaltende Feststoffe auf dem Boden absetzen können.

Das mittels der mechanischen Verfahren vorgereinigte Abwasser durchläuft im Anschluss in der Regel eine biologische Klärstufe. Hier werden mit Hilfe von Mikroorganismen vor allem die im Abwasser enthaltenden Stickstoff-, Phosphor- sowie Kohlenstoffverbindungen abgebaut. Dafür wird das Abwasser beispielsweise mit Bioschlamm angereichert. Um zu verhindern, dass die zum Einsatz kommenden Mikroorganismen geschädigt bzw. zerstört werden, sollte das Abwasser einen pH-Wert im neutralen Bereich von etwa 6 bis 8 aufweisen. Insbesondere Industrieabwässer beispielsweise können jedoch stark sauer sein, beispielsweise einen pH-Wert von ca. 3 bei 20°C besitzen. Der pH-Wert muss daher zunächst erhöht werden, bevor das Abwasser mit den Mikroorganismen in Kontakt gebracht wird. Zur Erhöhung des pH-Wertes kommt beispielsweise Natriumhydroxid als Base zum Einsatz, die dem Abwasser zugegeben wird. Ist das Abwasser hingegen alkalisch, so muss der pH-Werte vor der biologischen Reinigung zunächst gesenkt werden, wofür beispielswiese Chlorwasserstoff als Säure verwendet werden kann. Im Anschluss an den biologischen Reinigungsprozess wird das Abwasser in ein Nachklärbecken geleitet werden, wo sich der biologische Schlamm absetzen kann.

Die dritte Reinigungsstufe der Abwasseraufbereitungs-Verfahren besteht in einer chemischen Klärstufe. Diese ist vor allem erforderlich, da die in gelöster Form im Abwasser vorhandenen Phosphate weder mechanisch noch unter Anwendung biologischer Verfahren entfernt werden können. Der Phosphatgehalt wird in der chemischen Stufe reduziert, indem mittels geeigneter Chemikalien die gelösten Phosphate in ungelöste Phosphate umgewandelt werden, insbesondere zur Bildung von Flocken gebracht werden, die im Anschluss aus dem Abwasser entfernt werden können. Dieser Vorgang wird auch als Fällung bezeichnet. Als Fällmittel kommen Aluminium- oder Eisensalz oder auch Kalk zum Einsatz. Da der Fällungsvorgang, insbesondere die erforderliche Dosis des Fällmittels durch den vorherrschenden pH-Wert beeinflusst werden, sollte auch vor der chemischen Stufe eine Überprüfung des pH-Wertes und gegebenenfalls eine Anpassung dieses erfolgen.

Die bekannten Abwasseraufbereitungsverfahren haben sich bewährt. Insbesondere die zur Anpassung des pH-Wertes des Abwassers zum Einsatz kommenden Stoffe können jedoch erhebliche Kosten verursachen. Darüber hinaus ist mit deren Herstellung ein erheblicher Energieaufwand verbunden, was eine Umweltbelastung darstellt.

Ausgehend von diesem Stand der Technik ist es eine Aufgabe der vorliegenden Erfindung, ein Verfahren zur Aufbereitung von sauren Stoffen anzugeben, welches sich durch eine einfache und umweltfreundliche Durchführbarkeit sowie geringe Kosten auszeichnet.

Diese Aufgabe wird bei einem Verfahren der eingangs genannten Art dadurch gelöst, dass zur Erhöhung des pH-Wertes Altglaspulver hinzugefügt wird, wobei das Altglaspulver mit Wasser vermischt wird, um es in wässrige Lösung zu bringen.

Erfindungsgemäß wird somit Altglaspulver zur Neutralisierung von sauren Stoffen verwendet. Es hat sich herausgestellt, dass Altglas - alternativ zu der bereits stattfindenden Verwertung, nämlich dem Recycling zu neuen Glasprodukten - zum Einsatz kommen kann, um auf kostengünstige und umweltfreundliche Weise den pH-Wert von Abwasser zu erhöhen. Dazu wird das gesammelte Altglas nicht, wie aus dem Stand der Technik bekannt eingeschmolzen, um als Rohstoff für die Glasherstellung abermals zur Verfügung zu stehen, sondern es wird eine wässrige Lösung aus dem Altglas bzw. aus Altglaspulver hergestellt.

Dem liegt die Erkenntnis zugrunde, dass Glas entgegen der geläufigen Meinung kein inertes Material ist, sondern man es durchaus in Lösung mit Wasser geben kann (siehe Wikipedia "Hydrolytische Klasse"; Prof.-Dr. Blume, Lehrstuhl an der Hochschule Bielefeld im Bereich Chemie und Didaktik der Chemie; Prof.-Dr. Blume, Internetplattform http://www.chemieunterricht. de/de2/glas/glast_02.html - "Eigenschaften von Glas"; Prof. Pfeifer, "Glas als Werkstoff", Fachzeitschrift NiU-Chemie, 7. Jahrgang 1996, 35, S. 14 ff.; Grob und Prof.-Dr. Lesaar, Werkstoffe am Bau, Band 10, Köln-Aulis Vlg. Deubner & Co. KG, ISBN: 978-3-7614-2184-0; Hollemann und Wiberg, Lehrbuch der Anorganischen Chemie, 101. Aufl., deGruyter Vlg., Berlin; Riedel, Anorganische Chemie, 8. Auflage, deGruyter Vlg., Berlin, ISBN: 978-3-11-022566-2) kann. Glaspulver enthält unter anderem Calciumoxide, Natriumoxide oder auch Kaliumoxide, die den alkalischen Charakter einer Glaslösung eindeutig beeinflussen. Das Glaspulver oder auch Glasmehl mit einer Körnung in µm-Bereich weist eine enorm große Oberfläche auf, die einen hervorragenden Zugang für Wassermoleküle und den damit einhergehenden Prozess der Hydrolyse bzw. Protolyse ermöglicht mit der Wirkung, dass aus den Pulverpartikeln basische Verbindungen herausgelöst werden.

Grundsätzlich ist es somit möglich, mit Altglaspulver beliebige saure Stoffe zu neutralisieren. Erforderlich ist hierzu, dass das Altglaspulver mit einer ausreichenden Menge an Wasser in Verbindung gebracht wird, so dass eine Lösung entsteht. Wenn trockene Stoffe wie beispielsweise Böden neutralisiert werden sollen, kann das Altglaspulver zunächst auf dem trockenen Stoff aufgebracht werden, bevor der Stoff künstlich oder natürlich beregnet wird. Gemäß einer Ausführungsform der vorliegenden Erfindung ist jedoch vorgesehen, dass aus dem Altglas bzw. aus dem Altglaspulver eine wässrige Lösung hergestellt wird und dann die wässrige Lösung in Kontakt mit dem sauren Stoff gebracht wird.

In bevorzugter Weise erfolgt die Herstellung der Lösung, indem zunächst Altglas bereitgestellt und zerkleinert wird, so dass ein Pulver aus Altglas erhalten wird. Hierfür kann das Altglas beispielsweise in an sich bekannter Weise zermahlen werden. Anschließend wird zu dem Altglaspulver Wasser gegeben, so dass das Altglaspulver wenigstens teilweise in Lösung geht und ein Gemisch aus Lösung und Altglasschlamm entsteht. Hierfür wird das Gemisch zweckmäßiger Weise leicht gerührt. In dem Altglas enthaltenes Natrium- und Calciumoxid reagiert mit Wasser zu Natrium- bzw. Calciumhydroxid, und infolge dessen steigt der pH-Wert der Lösung in den alkalischen Bereich, insbesondere auf einen pH-Wert im Bereich von etwa 10 bis 11.

Nach der Herstellung wird die alkalische Altglas-Lösung zu dem zu behandelnden Stoff bzw. Abwasser gegeben, wodurch dessen pH-Wert erhöht wird. Das Abwasser befindet sich hierzu beispielsweise in einem großen Behälter, in den die Lösung eingelassen wird.

Ein weiterer Vorteil der erfindungsgemäß aus Altglas hergestellten Lösung besteht darin, dass die durch den Löseprozess erhaltenen Stoffe, insbesondere das Calciumhydroxid eine Fällung, beispielsweise des im Abwasser enthaltenen anorganisches Phosphats bewirken. Die Fällungswirkung ist dadurch bedingt, dass sich das Calciumhydroxid mit dem Phosphat zu wasserunlöslichem Calciumphosphat niederschlägt. Der Fällungsprozess wird ferner durch Zirkonium, welches ebenfalls in Altglas enthalten ist, weiter begünstigt. Es ist weiterhin in geringen Mengen Aluminiumoxid in Altglas enthalten, welches - analog zu dem Calciumoxid - mit Wasser zu Aluminiumhydroxid reagiert und ebenfalls die Fällungswirkung verstärkt. Die erfindungsgemäße Lösung stellt somit auch ein günstiges, umweltfreundliches und effizientes Fällmittel dar. Die Fällungswirkung kann ferner durch gezielte Zugabe von Aluminiumhydroxid, welches als Abfallprodukt aus der Aluminiumindustrie zur Verfügung steht, noch weiter verbessert werden.

Für die Herstellung der erfindungsgemäßen Lösung kann jede Form von bekanntem Altglas, wie es beispielsweise in Haushalten als Abfall anfällt oder im industriellen Bereich, verwendet werden. Es kann insbesondere auch Altglas zum Einsatz kommen, welches vergleichsweise hohe Anteile von Keramik-, Porzellan- oder auch Steingut-Partikeln enthält. Es kann ferner beispielsweise auch Kobaltglas, welches nicht in den Glas-Recycling-Prozess rückgeführt werden kann, erfindungsgemäß zum Einsatz kommen. Derartiges Altglas kommt in der Regel nicht für eine Einschmelzung und Neuherstellung von Glasprodukten, wie Recycling-Flaschen oder ähnlichem, in Frage. Somit wird gemäß der vorliegenden Erfindung eine völlig neue Verwertungsmöglichkeit für ansonsten unbrauchbares Altglas eröffnet. Eine Begrenzung hinsichtlich der erfindungsgemäßen Verwendbarkeit von Altglas ist lediglich dadurch gegeben, dass keine schädlichen Stoffe, jedenfalls nicht in größeren Mengen enthalten sein sollten, die über die Lösung in das Abwasser gelangen und dieses somit erneut verunreinigen.

Durch den erfindungsgemäßen Einsatz der Lösung wird - allein unter Nutzung eines zur Verfügung stehenden Abfallproduktes, nämlich Altglas - ein kostengünstiges, umweltfreundliches Mittel zur dringend notwendigen Aufbereitung von Abwasser bereitgestellt. Es wird somit ein völlig neuer Zweig für ein nachhaltiges Stoffstrommanagement eröffnet. Das Altglas, was vielerorts in großen Mengen zur Verfügung steht und preiswert ist, wird in eine neue Verwertungskette eingebunden, wobei gegenüber der vorbekannten Verwendung in erheblichem Maße Energie eingespart wird, da gemäß der vorliegenden Erfindung keine Einschmelzung des Altglases erfolgt. Dies führt zu einer verbesserten CO₂-Bilanz. Diese ergibt sich auch im Vergleich mit den aus dem Stand der Technik vorbekannten Mittel zur Erhöhung des pH-Wertes, da deren Herstellung mit einem nicht unerheblichen Energieaufwand verbunden ist, der bei der erfindungsgemäßen Herstellung einer Lösung aus Altglaspulver deutlich unterschritten wird. Die aus Altglaspulver hergestellte Lösung ist darüber hinaus erheblich kostengünstiger als die bekannten Mittel zur pH-Wert-Erhöhung von Abwasser, so dass - gegenüber den konventionellen Methoden - weiter Kosten eingespart werden.

Die erfindungsgemäße Nutzung von Altglas bietet den weiteren Vorteil, dass vorhandene Altglasmengen reduziert werden, wodurch Lagerungs- und Aufbereitungskosten verringert werden.

Das erfindungsgemäße Verfahren kann problemlos in bestehende Kläranlagen, in denen Abwasser aufbereitet wird, integriert werden. Dem Fachmann ist klar, dass die erfindungsgemäß aus Altglaspulver hergestellte Lösung - analog zu anderen vorbekannten Flüssigkeiten, die bei der Abwasseraufbereitung zum Einsatz kommen - auf beliebige Weise mit dem zu behandelnden Abwasser in Kontakt gebracht werden kann. Die Lösung, die beispielsweise in einem separaten Behälter, der zu diesem Zweck in einer Kläranlage bereitsteht, hergestellt und/oder gelagert wird, kann aus dem Behälter zu dem aufzubereitenden Abwasser, welches sich beispielsweise in einem weiteren Behälter befindet, oder einen vorgegebenen Abschnitt der Kläranlage durchströmt, gegeben werden.

Gemäß einem Ausführungsbeispiel der vorliegenden Erfindung ist vorgesehen, dass eine aus Altglaspulver hergestellte wässrige Lösung zu dem sauren Stoff gegeben wird, um dessen pH-Wert zu neutralisieren, insbesondere auf einen pH-Wert im Bereich von 6 bis 8, insbesondere etwa 7 zu bringen.

In vorteilhafter Ausgestaltung wird der pH-Wert des sauren Stoffs kontinuierlich überwacht, und es wird aus Altglaspulver hergestellte wässrige Lösung zu gegeben, bis ein vorgegebener pH-Wert erreicht wird. Die automatische Regelung des pH-Wertes gemäß dieser Ausführungsform gewährleistet bei der Wasseraufbereitung, dass ein für die Anwendung des Abwasseraufbereitungsverfahrens erforderlicher pH-Wert eingehalten wird. Dabei können aus dem Stand der Technik bekannte Vorrichtungen und Verfahren zum Einsatz kommen, um den pH-Wert zu bestimmen und mittels einer Regelungseinrichtung kann die Zugabe von aus Altglaspulver hergestellter Lösung derart reguliert werden, dass ein vorgegebener pH-Wert erreicht und gehalten wird.

Eine weitere Ausführungsform zeichnet sich dadurch aus, dass die aus Altglas hergestellte Lösung erhalten wird durch die folgenden Schritte:
aus Altglas hergestelltes Pulver wird bereitgestellt,
zu dem Altglaspulver wird Wasser hinzugegeben, so dass das Altglaspulver wenigstens teilweise in Lösung geht und ein Gemisch aus Lösung und Altglasschlamm entsteht, und
aus dem Gemisch von Lösung und Altglasschlamm wird die Lösung, insbesondere durch Dekantieren wenigstens teilweise entnommen und dem sauren Stoff zugegeben.

Dabei kann insbesondere vorgesehen sein, dass
a) dem Altglasschlamm nach der Entnahme der Lösung ein weiteres Mal Wasser zugegeben wird, um ein Gemisch aus Lösung und Altglasschlamm herzustellen,
b) die Lösung dem Gemisch wiederum insbesondere durch Dekantieren entnommen und dem sauren Stoff zugegeben wird,
wobei die Schritte a) und b) gegebenenfalls mehrfach wiederholt werden.

Das Dekantieren und die erneute Zugabe von Wasser sind zweckmäßig, da sich im Löseprozess durch die Dissoziation des Wassers ab einem bestimmten Zeitpunkt ein Gleichgewicht einstellt und kein Altglaspulvermehr in Lösung geht. Durch Entnahme von Lösung und Zugabe von Wasser wird das Gleichgewicht gestört und der Löseprozess setzt von neuem ein. Im Ergebnis wird auf diese Weise der Wertstoff Altglas besonders effizient ausgenutzt, da eine große Menge Lösung aus einer vorgegebenen Menge von Altglaspulver erhalten wird.

Wenn das erfindungsgemäße Verfahren bei der Abwasserreinigung eingesetzt wird, durchläuft das Abwasser gemäß einem weiteren Ausführungsbeispiel eine biologische Klärstufe, und es wird vor der biologischen Klärstufe aus Altglaspulver hergestellte wässrige Lösung zu dem Abwasser hinzugegeben. Dabei kann insbesondere vorgesehen sein, dass im Rahmen der biologischen Klärstufe zu dem Abwasser Altglasschlamm, der nach der Entnahme der Lösung aus dem Gemisch aus Lösung und Altglasschlamm bereit steht, gegeben wird.

Das Abwasser kann gemäß dieser Ausführungsform, nachdem es in der biologischen Klärstufe mit Bioschlamm angereichert wurde, ferner mit Altglasschlamm, welcher bei der erfindungsgemäßen Herstellung der Altglas-Lösung übrig bleibt, beimpft werden, indem der Altglasschlamm zu dem Abwasser gegeben wird. So kann parallel zu der biologischen Reinigung mittels der Mikroorganismen eine Adsorption problematischer Rückstände, wie etwa Medikamentenrückstände, Hormone oder Schwermetalle an den Glaspartikeln erfolgen. Das Glaspulver bietet eine enorme Oberfläche, die im Abwasser als Mikrofilter beispielsweise für Schwermetalle und radioaktive Stoffe dienen kann. Ferner bieten die Glaspartikel einen Anheftungspunkt für den Bioschlamm.

Alternativ oder zusätzlich kann vorgesehen sein, dass das Abwasser eine chemische Klärstufe durchläuft und vor der chemischen Klärstufe aus Altglaspulver hergestellte wässrige Lösung zu dem Abwasser hinzugegeben wird.

Da insbesondere vor der biologischen und der chemischen Klärstufe eine Anpassung des pH-Wertes des Abwassers erforderlich ist, um der Zerstörung von Mikroorganismen vorzubeugen, bzw. den Fällungsprozess zu begünstigen, ist es zweckmäßig, aus Altglas hergestellte Lösung vor der biologischen und/oder vor der chemischen Klärstufe zu dem Abwasser zu geben.

Darüber hinaus wird durch das in der aus Altglaspulver hergestellten Lösung enthaltene Calciumhydroxid auch eine Fällung von in dem Abwasser enthaltenen anorganischem Phosphat bewirkt, so dass der Fällungsprozess in der chemischen Klärstufe verstärkt wird. Daher ist es besonders zweckmäßig, vor der chemischen Klärstufe erfindungsgemäß aus Altglas hergestellte Lösung zu dem Abwasser zu geben.

Um gute Bedingungen für den Löseprozess zu schaffen kann vorgesehen sein, dass die aus Altglas hergestellte Lösung gekühlt wird, insbesondere auf eine Temperatur im Bereich von 10°C bis 17°C, bevor sie zu dem zu behandelnden Abwasser gegeben wird. Die Löslichkeit von Calciumoxid ist in diesem Temperaturbereich besonders gut, so dass auf effiziente Weise Calciumhydroxid erhalten wird.

Zusammen mit der erfindungsgemäß aus Altglaspulver hergestellten Lösung können ferner bekannte polare Adsorbienten, wie beispielsweise Kieselgel, Aluminiumoxid, Zeolithe und Tonerde sowie unpolare Adsorbienten wie Aktivkohle zum Einsatz kommen, um das Abwasser aufzubereiten.

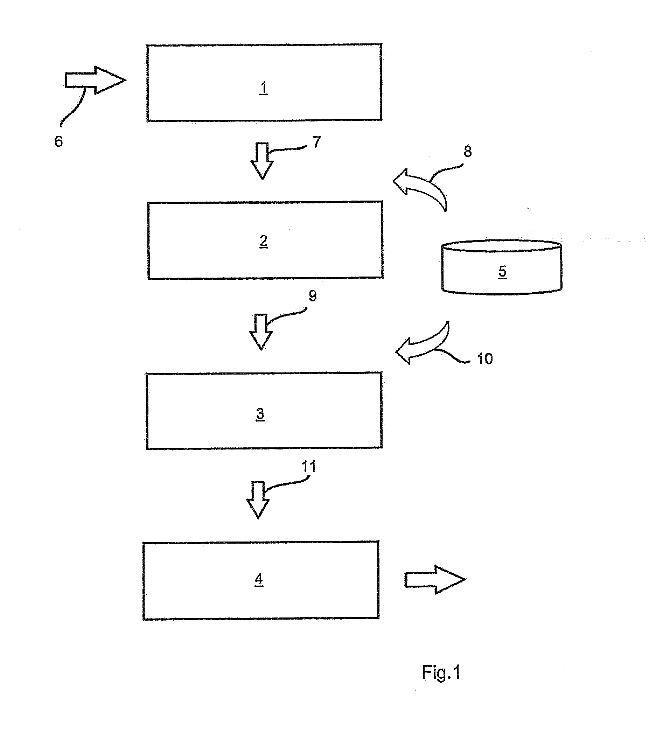

Weitere Merkmale und Vorteile der vorliegenden Erfindung werden anhand der nachfolgenden Beschreibung einer bevorzugten Ausführungsform eines erfindungsgemäßen Verfahrens zur Aufbereitung von Abwasser unter Bezugnahme auf die beiliegende Zeichnung deutlich.

In der Zeichnung zeigt die einzige Figur in stark vereinfachter Darstellung eine Kläranlage, in welcher das erfindungsgemäße Verfahren zur Aufbereitung von Abwasser zur Anwendung kommt. In der Kläranlage durchläuft das Abwasser zur Aufbereitung, in an sich bekannter Weise mehrere Klärstufen. Hierzu umfasst die Kläranlage eine Vielzahl von Behältern und zugehörigen Leitungen, die jeweils den verschiedenen Klärstufen zugeordnet sind. In der Figur sind insgesamt vier Klärstufen, eine mechanische Klärstufe 1, eine biologische Klärstufe 2, eine chemische Klärstufe 3 und eine Filtrationsstufe 4 der Kläranlage in schematischer Darstellung gezeigt. Die Kläranlage umfasst ferner einen Behälter 5, in welchem die gemäß der vorliegenden Erfindung zum Einsatz kommende Lösung aus Altglaspulver hergestellt und gelagert wird.

Aus einem in der Figur nicht dargestellten Reservoir wird aufzubereitendes Abwasser in die mechanische Klärstufe 1 geleitet. Bei dem Abwasser handelt es sich um saures, industrielles Abwasser mit einem pH-Wert von etwa 3. Der pH-Wert des Abwassers wird mittels in der Figur nicht dargestellter Prüfeinrichtungen an mehreren Stellen in der Kläranlage, konkret beim Austritt aus der mechanischen Klärstufe 1, beim Eintritt in die biologische Klärstufe 2 und beim Eintritt in die chemische Klärstufe 3 gemessen.

In der mechanischen Klärstufe 1 der Kläranlage sollen zunächst Feststoffe, die als vergleichsweise große Partikel in dem Abwasser vorliegen, entfernt werden. Dafür sind mehrere in der Figur nicht dargestellte Grob- und Feinrechen in der mechanischen Klärstufe 1 vorgesehen, durch welche das zu behandelnde Abwasser geleitet wird, um die Partikel aus dem Abwasser heraus zu sieben. Darüber hinaus umfasst die mechanische Klärstufe 1 einen Sand- und Fettfang, mittels dem in an sich bekannter Weise Sand und Fett aus dem Abwasser entfernt werden.

Nachdem die mechanische Vorreinigung des Abwassers abgeschlossen ist, wird es, wie mit dem Pfeil 7 angedeutet, aus der mechanischen Klärstufe 1 entnommen. Da das Abwasser weiterhin sauer ist (pH-Wert von etwa 3), kann das Abwasser nicht unmittelbar einer biologischen Reinigung mittels Mikroorganismen in der biologischen Klärstufe 2 unterzogen werden, da die Mikroorganismen durch das saure Abwasser zerstört werden können. Es muss zunächst eine Anpassung des pH-Wertes, hier eine Erhöhung erfolgen. Dies geschieht erfindungsgemäß mittels einer aus Altglaspulver hergestellten Lösung, die in dem Behälter 5 bereitsteht.

Die Lösung aus Altglas wird separat hergestellt, indem Altglaspulver und Wasser in einem entsprechenden Herstellungsbehälter in Lösung gebracht werden. Dabei entsteht ein Gemisch aus alkalischer Lösung und Altglasschlamm. Um den Löseprozess zu begünstigen, wird das in dem Herstellungsbehälter befindliche Gemisch dabei mittels einer nicht dargestellten Rühreinrichtung leicht gerührt. Zur weiteren Begünstigung des Löseprozesses ist dem Herstellungsbehälter ferner eine Kühleinrichtung zugeordnet, die aktiviert werden kann, sofern das Wasser, welches zu dem Altglaspulver in den Herstellungsbehälter gegeben wird, eine Temperatur oberhalb von 17°C aufweist.

Von dem Altglasschlamm/Lösungs-Gemisch wird anschließend die Lösung entnommen, d.h. abgeschöpft bzw. dekantiert, und in den Behälter 5 geleitet. Auf der Grundlage des verbleibenden Altglasschlamms wird durch Zugabe von Wasser in den Herstellungsbehälter ein weiteres Mal ein Gemisch aus alkalischer Lösung und Altglasschlamm hergestellt, wobei die Lösung wiederum abgeschöpft und in den Behälter 5 geleitet wird. Auf der Basis des verbleibenden Altglasschlamms kann dann erneut eine Lösung hergestellt werden. Dieser Prozess, bei dem ein Gemisch aus Altglasschlamm und Lösung auf der Basis von Altglasschlamm aus der vorherigen Stufe hergestellt wird, kann mehrfach wiederholt werden. Es versteht sich, dass mit zunehmenden Wiederholungen der sich in der Lösung einstellende pH-Wert abnimmt. Es sind also nur begrenzt viele Wiederholungen möglich, bis der sich in der Lösung einstellende pH-Wert unterhalb von 8 liegt.

Der pH-Wert der alkalischen Lösung, welcher mittels einer nicht dargestellten Prüfeinrichtung, die dem Behälter 5 zugeordnet ist, überwacht wird, beträgt etwa 9 bis 11.

Wie mit dem Pfeil 8 angedeutet, wird alkalische Altglas-Lösung aus dem Behälter 5 entnommen und zu dem sauren Abwasser gegeben, bevor es in der biologischen Klärstufe 2 mit den Mikroorganismen in Kontakt gebracht wird. Hierfür ist am Eingang der biologischen Klärstufe 2 ein nicht dargestellter Mischbehälter vorgesehen, in welchen sowohl Abwasser aus der mechanischen Klärstufe 1 als auch alkalische Altglas-Lösung aus dem Behälter 5 gepumpt wird. Es wird dazu sowie Altglas-Lösung zu dem zu behandelnden Abwasser gegeben, so dass sich ein neutraler pH-Wert von 7 einstellt.

Das neutralisierte Abwasser wird im Anschluss an den Neutralisationsvorgang in der biologischen Klärstufe 2 in an sich bekannter Weise insbesondere unter Einsatz von Bioschlamm biologisch gereinigt. Dabei wird zusätzlich Altglasschlamm, welcher bei dem Herstellungsprozess der Lösung aus Altglaspulver übrig geblieben ist, zu dem Abwasser gegeben, um parallel zu der Reinigung mittels Mikroorganismen eine Adsorption von schädlichen Inhaltsstoffen an den Glaspartikeln zu ermöglichen.

Anschließend wird das Abwasser, wie durch den Pfeil 9 angedeutet, in die chemische Klärstufe 3 geleitet. Diese dient der Reduzierung des Phosphatgehalts in dem Abwasser, was bei dem dargestellten Ausführungsbeispiel durch Zugabe des Fällungsmittels Aluminiumsalz erfolgt. Da der Fällungsvorgang, insbesondere die erforderliche Dosis des Fällmittels durch den vorherrschenden pH-Wert beeinflusst werden, findet auch am Austritt der biologischen Klärstufe 2 zunächst eine Überprüfung des pH-Wertes statt. Weist dieser keinen für den Fällungsvorgang günstigen Wert auf, so wird, wie durch den Pfeil 10 dargestellt, auch vor der chemischen Reinigung aus Altglaspulver hergestellte Lösung aus dem Behälter 5 entnommen und zu dem Abwasser gegeben. Hierfür ist - in gleicher Weise wie bei der biologischen Klärstufe 2 - am Eingang der chemischen Klärstufe 3 ein nicht dargestellter Mischbehälter vorgesehen, in welchen sowohl Abwasser aus der biologischen Klärstufe 2 als auch alkalische Altglas-Lösung aus dem Behälter 5 gepumpt wird.

Das Abwasser, welches nun einen für den Fällungsvorgang günstigen pH-Wert aufweist, wird in der chemischen Klärstufe 3 gereinigt. Dabei wird durch das in der aus Altglaspulver hergestellten Lösung enthaltene Calciumhydroxid der Fällungsprozess in der chemischen Klärstufe verstärkt. Der Fällungsprozess wird ferner durch Zirkonium, welches ebenfalls in Altglas enthalten ist, weiter begünstigt.

Im Anschluss gelangt das Abwasser, wie durch den Pfeil 11 angedeutet, aus der chemischen Klärstufe 3 in eine dieser nachgeschalteten Filtrationsstufe 4, in welcher das Abwasser in an sich bekannter Weise gefiltert wird. Abschließend wird das aufbereitete Abwasser entnommen und kann aus der Kläranlage in bestehende Gewässer rückgeführt werden.

### Beispiel

Um den Effekt der Erfindung zu verdeutlichen, wurden Versuche durchgeführt. Dabei wurde aus einer 37%igen HCl-Lösung durch Verdünnung eine 10⁻³ molare Lösung hergestellt. Diese hatte einen gemessenen pH-Wert von 3,12 und eine Temperatur von 21°C. Die so hergestellte HCl-Lösung wurde als Ersatz für ein saures Abwasser für die Versuchszwecke verwendet.

Eine alkalische Glaspulver-Lösung wurde hergestellt, indem 10 g Glaspulver in 100 ml destilliertem Wasser (Aqua dest.) bei einer Temperatur von 19,7°C gelöst und kurz umgeschwenkt wurde (1. Auslaugung). Nach kurzer Zeit (ca. 1 Minute) stellte sich ein pH-Wert ein, der mehr oder weniger konstant blieb. Über einen Zeitraum von 3 Stunden und unter ständigem Rühren waren keine signifikanten pH-Wertänderungen mehr zu beobachten.

Anschließend wurde die Suspension gefiltert und nochmals der pH-Wert gemessen. Der pH-Wert der Suspenion und des Filtrats zeigten vernachlässigbar geringfügige Unterschiede. Der Filterrückstand wurde nochmals in 100 ml Aqua dest. in Lösung gebracht, und der pH-Wert vor und nach der Filtration wurde gemessen, so dass sukzessive 4 Auslaugungen mit unterschiedlichen pH-Werten gewonnen werden konnte, die einen pH-Wert größer als 7 aufwiesen, wie die nachfolgende Tabelle zeigt:

| Zeit in min. | 1. Auslaugung pH | 2. Auslaugung pH | 3. Auslaugung pH | 4. Auslaugung pH |
|---|---|---|---|---|
| 30 | 10,25 | 8,93 | 8,67 | 8,65 |
| 60 | 10,00 | 8,86 | 8,71 | 8,70 |
| 90 | 9,90 | 8,87 | 8,68 | 8,64 |
| 120 | 9,94 | 9,01 | 8,72 | 8,66 |
| 150 | 9,96 | 8,97 | 8,81 | 8,67 |
| 180 | 9,97 | 9,01 | 8,92 | 8,75 |
| Filtrat pH | 9,84 | 9,08 | 9,05 | 8,88 |

Die Messungen zeigen, dass der pH-Wert der gefilterten Lösung, d.h. des Filtrats, nach der ersten Auslaugung knapp unter 10 liegt und zunehmend bis zur vierten Auslaugung auf etwa 8,9 abfällt.

Die filtrierte Lösung wurde anschließend für die Neutralisation der hergestellten HCl-Lösung verwendet. Gemessen wurde mit einem pH-Messgerät. Das Abwasservolumen, d.h. das Volumen der HCl-Lösung, betrug dabei jeweils 20 ml. Ermittelt wurde die jeweils eine notwendige Menge filtrierter Lösung, die zu einer Neutralisation führt. Parallel wurden die pH-Werte bei Zugabe einer entsprechenden Menge Aqua dest. ermittelt. Die Ergebnisse der durchgeführten Versuche sind in der nachfolgenden Tabelle dargestellt.

| Filtrat (Glaslösung in ml) | 1. pH Abwasser | 2. pH Abwasser | 3. pH Abwasser | 4. pH Abwasser |
|---|---|---|---|---|
| 1 | 3,22 | 3,12 | 3,04 | 3,01 |
| 2 | 3,35 | 3,24 | 3,14 | 3,1 |
| 3 | 3,8 | 3,74 | 3,67 | 3,57 |
| 4 | 4,48 | 4,17 | 4,02 | 3,98 |
| 5 | 5,17 | 4,8 | 4,64 | 4,6 |
| 8 | 6,56 | 5,38 | 5,23 | 5,1 |
| 9 | 6,99 | 5,78 | 5,6 | 5,58 |
| 15 | | 6,6 | 6,4 | 6,37 |
| 20 | | 6,98 | 6,85 | 6,88 |
| 23 | | | 7,01 | 6,91 |
| 25 | | | | 7,12 |
| Blindprobe | (9 ml Aqua dest.) 4,38 | (20 ml Aqua dest.) 5,96 | (23 ml Aqua dest) 6,32 | (25 ml Aqua dest) 6,64 |
| Verhältnis Abwasser: Glaslösung | 1:0,45 | 1:1 | 1:1,15 | 1:1,25 |
| Bezogen auf je 100 ml Überstandslsg. | 222,2 ml Abwasser | 100 ml Abwasser | 86,96 ml Abwasser | 80 ml Abwasser |

Durch Zugabe von 9 ml des Filtrats der ersten Auslaugung stellt sich ein pH-Wert von 6,99 ein. Die äquivalente Menge an Aqua dest. als Blindprobe veränderte den pH-Wert des Abwassers auf 4,38. Durch Zugabe der gesamten Mengen des Filtrats (100 ml), konnten auf diese Weise mit der ersten Auslaugung 222, 2 ml Abwasser neutralisiert werden. Das Verhältnis von Abwasser zur Glaslösung beträgt damit 1:0,45.

In gleicher Weise wurde mit dem Filtrat der jeweils zweiten Auslaugung verfahren. 20 ml des Filtrats der zweiten Auslaugung neutralisierten 20 ml des Abwassers. Bei der Blindprobe stellt sich ein pH-Wert von 5,96 ein. An diesem Punkt wurde ein Verhältnis von 1:1 erreicht, so dass die gesamte Menge des Filtrats der zweiten Auslaugung 100 ml Abwasser neutralisierte.

Die dritte Auslaugung steht zum Abwasser im Verhältnis 1:1,15, und die vierte Auslaugung in einem Verhältnis von 1:1,25.

In der Gesamtbilanz wurde mit einer Einwaage von 10 g Glaspulver und der daraus gewonnenen Filtratmenge insgesamt 489,16 ml Standardabwasser mit einem pH-Wert von 3,12 neutralisiert.

Darüber hinaus wurde zur Doppelbestimmung eine maßanalytische Titration durchgeführt. Dieses Untersuchungsverfahren untermauerte und bestätigte die gemessenen Ergebnisse und zeigte vernachlässigbar geringfügige Abweichungen.

Ferner war es möglich, das Glaspulver direkt ins Abwasser zu geben, ohne vorher eine gewisse Menge an Filtrat zu gewinnen. Demgegenüber zeigten die Ergebnisse ein wesentlich schlechteres Verhältnis, d.h. die äquivalente Menge an Glaspulver hatte hier nicht das gleiche Vermögen wie das gewonnene Filtrat der mehreren Auslaugungsstufen, auch die gleiche Menge an Abwasser zu neutralisieren.

Die beschriebene Reaktion bei diesem Verfahren, das hier zum Einsatz gekommen ist, vermochte nicht nur flüssiges, saures Abwasser zu neutralisieren. Ungeachtet dessen konnten alle sauren Stoffe in unterschiedlichen Zustandsformen durch den Einsatz von Glaspulver neutralisiert werden, wie zum Beispiel die Behandlung von Gülle, von sauren Böden, zum Beispiel in der Landwirtschaft oder in Gartenanlagen der Hygiene oder der medizinischen Ver- und Entsorgung. Auch war es denkbar, diese Eigenschaften des Glaspulvers in Verbindung mit anderen Werkstoffen zu kombinieren, um auch hier vollkommen neue Materialeigenschaften zu entwickeln, zum Beispiel im Bereich des Bau- und Denkmalschutzes (Glaspulver bzw. Glasmehl als Schutzmittel gegen acidophilen Angriff im Gestein, zum Beispiel sauren Regen), der Entwicklung von Baustoffen u.a.m.

Somit können mit einer Einwaage von 10 g Glaspulver 498,16 ml Abwasser (pH3) neutralisiert werden.

## Patentansprüche

1. Verfahren zum Neutralisieren von sauren Stoffen, insbesondere von sauren Flüssigkeiten und sauren Flüssigkeit/Feststoff-Gemischen, **dadurch gekennzeichnet, dass** dem sauren Stoff zur Erhöhung des pH-Wertes Altglaspulver hinzugefügt wird, wobei das Altglaspulver mit Wasser vermischt wird, um es in wässrige Lösung zu bringen.

2. Verfahren nach Anspruch 1, **dadurch gekennzeichnet, dass** zur Erhöhung des pH-Wertes des sauren Stoffes wenigstens einmal eine aus Altglaspulver hergestellte wässrige Lösung zu dem sauren Stoff gegeben wird.

3. Verfahren nach Anspruch 1, **dadurch gekennzeichnet, dass** eine aus Altglaspulver hergestellte wässrige Lösung zu dem sauren Stoff gegeben wird, um dessen pH-Wert zu neutralisieren, insbesondere auf einen pH-Wert im Bereich von 6 bis 8, insbesondere etwa 7 zu bringen.

4. Verfahren nach Anspruch 2 oder 3, **dadurch gekennzeichnet, dass** der pH-Wert des sauren Stoffs kontinuierlich überwacht wird und aus Altglaspulver hergestellte wässrige Lösung zu dem sauren Stoff gegeben wird, bis ein vorgegebener pH-Wert erreicht wird.

5. Verfahren nach einem der Ansprüche 2 bis 4, **dadurch gekennzeichnet, dass** die aus Altglas hergestellte Lösung erhalten wird durch die folgenden Schritte:
aus Altglas hergestelltes Pulver wird bereitgestellt,
zu dem Altglaspulver wird Wasser hinzugegeben, so dass das Altglaspulver wenigstens teilweise in Lösung geht und ein Gemisch aus Lösung und Altglasschlamm entsteht, und
aus dem Gemisch von Lösung und Altglasschlamm wird die Lösung,
insbesondere durch Dekantieren, wenigstens teilweise entnommen und dem sauren Stoff zugegeben.

6. Verfahren nach Anspruch 5, **gekennzeichnet durch** die Schritte, dass
a) dem Altglasschlamm nach der Entnahme der Lösung ein weiteres Mal Wasser zugegeben wird, um ein Gemisch aus Lösung und Altglasschlamm herzustellen, und
b) die Lösung dem Gemisch wiederum insbesondere **durch** Dekantieren entnommen und dem sauren Stoff zugegeben wird,
wobei die Schritte a) und b) gegebenenfalls mehrfach wiederholt werden.

7. Verfahren nach einem der vorhergehenden Ansprüche, **dadurch gekennzeichnet, dass** der saure Stoff Abwasser ist.

8. Verfahren nach Anspruch 7, **dadurch gekennzeichnet, dass** das Abwasser eine biologische Klärstufe (2) durchläuft und vor der biologischen Klärstufe (2) aus Altglaspulver hergestellte wässrige Lösung zu dem Abwasser hinzugegeben wird.

9. Verfahren nach Anspruch 8 und einem der Ansprüche 5 oder 6, **dadurch gekennzeichnet, dass** im Rahmen der biologischen Klärstufe (2) zu dem Abwasser Altglasschlamm, der nach der Entnahme der Lösung aus dem Gemisch aus Lösung und Altglasschlamm bereit steht, gegeben wird.

10. Verfahren nach einem der Ansprüche 7 bis 9, **dadurch gekennzeichnet, dass** das Abwasser eine chemische Klärstufe (3) durchläuft und vor der chemischen Klärstufe (3) aus Altglaspulver hergestellte wässrige Lösung zu dem Abwasser hinzugegeben wird.

11. Verfahren nach einem der Ansprüche 7 bis 10, **dadurch gekennzeichnet, dass** die aus Altglas hergestellte Lösung gekühlt wird, insbesondere auf eine Temperatur im Bereich von 10°C bis 17°C, bevor sie zu dem zu behandelnden Abwasser gegeben wird.

12. Verwendung von Altglaspulver zur Erhöhung des pH-Wertes insbesondere zur Neutralisierung von sauren Stoffen.
